# EUROPÄISCHE PATENTANMELDUNG

(11) **EP 2 269 787 A1**
(43) Veröffentlichungstag der Anmeldung: **05.01.2011**
(21) Anmeldenummer: 10005618.3
(22) Anmeldetag: 29.05.2010
(51) Int. Cl.: B27M 3/00, B32B 21/13, E06B 3/10, E06B 3/263

(54) **Brettschichtholz**

(30) Priorität: 03.07.2009 DE 102009031639
(71) Anmelder: Herbert Hagensieker Sägewerk GmbH, 49152 Bad Essen Wehrendorf (DE)
(72) Erfinder: Hagensieker, Martin, 49152 Bad Essen (DE)
(74) Vertreter: Deters, Frank

(57) **Zusammenfassung**

Die Erfindung betrifft ein Brettschichtholz (2) mit einer ersten äußeren Brettlage (4) und einer hierzu parallel angeordneten zweiten äußeren Brettlage (6), zwischen denen wenigstens eine weitere mittlere Brettlage (8) angeordnet ist. Zumindest eine der mittleren Brettlagen (8) besteht aus Pappelholz, das thermisch wie folgt vorbehandelt ist:
a) das Pappelholz wird in einer Kammer eines Wärmebehandlungsofen aufgeheizt;
b) ab Erreichen einer Temperatur von 100 °C in der Kammer, insbesondere von 130 °C, wird flüssiges Wasser in die Kammer eingespritzt und die Temperatur in der Kammer erhöht;
c) ab Erreichen einer Temperatur von 180 °C bis 200 °C, wird die Temperatur für 3 bis 6 Stunden gehalten;
d) anschließend wird die Temperatur in der Kammer abgekühlt und das Pappelholz wird der Kammer entnommen;

wobei während der Behandlungsschritte a) bis c) permanent Gas aus der Kammer mit einem Unterdruck von 5 bis 100 mbar, insbesondere 10 bis 30 mbar, abgesaugt wird.

## Beschreibung

Die Erfindung betrifft ein Brettschichtholz mit einer ersten äußeren Brettlage und einer hierzu parallel angeordneten zweiten Brettlage, zwischen denen wenigstens eine weitere mittlere Brettlage angeordnet ist.

Derartige Brettschichthölzer sind beispielsweise als Konstruktionsholz für die Herstellung von Fensterrahmen bekannt. Das Brettschichtholz ist dabei begrenzt widerstandsfähig gegen äußere Umwelteinflüsse und weist zudem einen akzeptablen Wärmedurchgangskoeffizienten (U-Wert) auf. Es wäre jedoch wünschenswert, den Wärmedurchgangskoeffizienten derartiger Brettschichthölzer und deren Beständigkeit gegen Witterungseinflüsse bei Verwendung als Konstruktionsholz weiter zu erhöhen.

Aus der DE 695 01 588 T2 ist ein Verfahren zur Behandlung von Holz bekannt, bei dem das Holz unter Einwirkung von Wasserdampf in einem Trockenofen erhitzt wird. Auch wenn die Widerstandsfähigkeit des dergestalt behandelten Holzes gegenüber unbehandeltem Holz erhöht ist, hat sich gezeigt, dass das behandelte Holz oft unerwünscht Risse ausbildet, die sich nachteilig auf den Wärmedurchgangskoeffizienten des Holzes und dessen Widerstandsfähigkeit gegenüber Witterungseinflüssen auswirken. Zudem weist das dergestalt behandelte Holz einen sehr unangenehmen Geruch auf.

Der Erfindung liegt daher die Aufgabe zugrunde, ein Brettschichtholz der eingangs genannten Art mit niedrigem Wärmedurchgangskoeffizienten und hoher Widerstandsfähigkeit gegenüber äußeren Witterungseinflüssen sowie einem nicht unangenehmen Geruch bereitzustellen.

Die Erfindung löst diese Aufgabe durch ein Brettschichtholz der eingangs genannten Art bei dem zumindest eine der mittleren Brettlagen aus Pappelholz besteht, das thermisch wie folgt vorbehandelt ist:
a) das Pappelholz wird in einer Kammer eines Wärmebehandlungsofen aufgeheizt;
b) ab Erreichen einer Temperatur von 100 °C in der Kammer, insbesondere von 130 °C, wird flüssiges Wasser in die Kammer eingespritzt und die Temperatur in der Kammer erhöht;
c) ab Erreichen einer Temperatur von 180 °C bis 200 °C, wird die Temperatur für 3 bis 6 Stunden gehalten;
d) anschließend wird die Temperatur in der Kammer abgekühlt und das Pappelholz wird der Kammer entnommen;
wobei während der Behandlungsschritte a) bis c) permanent Gas aus der Kammer mit einem Unterdruck von 5 bis 100 mbar, insbesondere 10 bis 30 mbar, abgesaugt wird.

Es hat sich gezeigt, dass dergestalt thermisch vorbehandeltes Pappelholz einen sehr niedrigen Wärmedurchgangskoeffizienten aufweist und dadurch das Brettschichtholz insgesamt einen reduzierten Wärmedurchgangskoeffizienten quer zur Längserstreckung der einzelnen Brettlagen aufweist. Zudem ist das thermisch vorbehandelte Pappelholz und damit auch das Brettschichtholz deutlich widerstandsfähiger gegen äußere Witterungseinflüsse. Insbesondere das Einspritzen von flüssigem Wasser anstelle von Wasserdampf in die Kammer bewirkt eine deutlich verminderte Rissbildung in dem behandelten Holz. Dies führt zu einer Absenkung des Wärmedurchgangskoeffizienten und einer Erhöhung der Widerstandsfähigkeit des so behandelten Holzes. Das flüssige Wasser erhitzt sich in der Kammer zunächst von etwa 10 °C bis 15 °C Anfangstemperatur auf 100 °C und geht erst dann in den gasförmigen Zustand über. Die Kammer wird zudem permanent mit einem leichten Unterdruck von etwa 0,02 bar abgesaugt. Im Inneren der Kammer wird quasi ein statisches Gleichgewicht aus Wassernebel und dampfförmigem Wasser sowie einer sauerstoffarmen Umgebung erzeugt. Hierdurch wird offenbar erreicht, dass weniger Wasser oder Wasserdampf in das Innere des zu behandelnden Holzes eindringt und dort durch eine Quellung der Holzfasern zur nachteiligen Rissbildung führt. Gleichzeitig wird durch das permanente Absaugen des Nebel- /Gasgemisches und Nachführen neuen Wassers, das dann erneut verdampft, erreicht, dass in der Kammer kaum Sauerstoff vorhanden ist. Etwaige unerwünschte Oxidationsprozesse in der Kammer, beispielsweise eine Verbrennung des Holzes, werden hierdurch verhindert. Das Absaugen in der Kammer entstehender Gase durch den leichten Unterdruck bewirkt zudem eine erhebliche Verbesserung des Geruches des dergestalt behandelten Holzes. Die Geruchsverbesserung ist vermutlich darauf zurückzuführen, dass während des Erhitzens des Holzes entstehendes Holzgas permanent durch den Unterdruck abgesaugt wird und sich nicht in der Kammer sowie darüber mittelbar auch im Holz anreichert. Die im Holzgas enthaltenen Verbindungen weisen einen sehr unangenehmen Geruch auf.

Mit Vorteil wird das während der thermischen Vorbehandlung des Pappelholzes ab Erreichen einer Temperatur von 100 °C in der Kammer, insbesondere von 130 °C, in die Kammer eingespritzte flüssige Wasser regelmäßig in einem zeitlichen Abstand von unter 20 Sekunden, insbesondere unter 10 Sekunden, eingespritzt. Es hat sich herausgestellt, dass der Wärmedurchgangskoeffizient und die Widerstandsfähigkeit des so behandelten Holzes weiter verbessert und auch eine Rissbildung weiter vermindert wird.

In einer vorteilhaften Ausgestaltung der Erfindung bestehen die erste äußere Brettlage und die zweite äußere Brettlage aus dem gleichen Material und weisen zudem die gleiche Form auf. Durch diese Ausgestaltung ist sichergestellt, dass sich das Brettschichtholz beispielsweise als Bestandteil eines Holzfensters, bei Einwirken unterschiedlicher klimatischer Bedingungen auf die erste äußere Brettlage einerseits und gegenüber der zweiten äußeren Brettlage andererseits dennoch nicht unerwünscht verzieht.

Mit Vorteil bestehen die erste äußere Brettlage und die zweite äußere Brettlage aus einem Hartholz, insbesondere aus heimischem Buchenholz. Durch diese Ausgestaltung kann die Widerstandsfähigkeit des Brettschichtholzes gegenüber äußeren Umwelteinflüssen weiter erhöht werden.

In einer besonders vorteilhaften Ausgestaltung der Erfindung sind das Holz der ersten äußeren Brettlage und der zweiten äußeren Brettlage thermisch wie folgt vorbehandelt:
a) das Holz wird in einer Kammer eines Wärmebehandlungsofen aufgeheizt;
b) ab Erreichen einer Temperatur von 100 °C in der Kammer, insbesondere von 130 °C, wird flüssiges Wasser in die Kammer eingespritzt und die Temperatur in der Kammer erhöht;
c) ab Erreichen einer Temperatur von 180 °C bis 200 °C, wird die Temperatur für 3 bis 6 Stunden gehalten;
d) anschließend wird die Temperatur in der Kammer abgekühlt und das Holz wird der Kammer entnommen;
wobei während der Behandlungsschritte a) bis c) permanent Gas aus der Kammer mit einem Unterdruck von 5 bis 100 mbar, insbesondere 10 bis 30 mbar, abgesaugt wird.

Durch diese Ausgestaltung sind einerseits die Wärmedurchgangskoeffizienten der ersten äußeren Brettlage und der zweiten äußeren Brettlage gegenüber einer Brettlage aus dem gleichen Material jedoch ohne der vorgenannten thermischen Behandlung reduziert und der Widerstandsfähigkeit gegenüber äußeren Witterungseinflüssen ist deutlich erhöht. Damit weist jedoch auch das dergestalt aufgebaute Brettschichtholz ebenfalls einen reduzierten Wärmedurchgangskoeffizienten auf und ist zudem widerstandsfähiger gegen äußere Witterungseinflüsse. Auch hier bewirkt das Einspritzen von flüssigem Wasser anstelle von Wasserdampf in die Kammer eine deutlich verminderte Rissbildung in dem behandelten Holz. Dies führt zu einer Absenkung des Wärmedurchgangskoeffizienten und einer Erhöhung der Widerstandsfähigkeit des so behandelten Holzes. Das flüssige Wasser erhitzt sich in der Kammer zunächst von etwa 10 °C bis 15 °C Anfangstemperatur auf 100 °C und geht erst dann in den gasförmigen Zustand über. Die Kammer wird zudem permanent mit einem leichten Unterdruck von etwa 0,02 bar abgesaugt. Im Inneren der Kammer wird quasi ein statisches Gleichgewicht aus Wassernebel und dampfförmigem Wasser sowie einer sauerstoffarmen Umgebung erzeugt. Hierdurch wird offenbar erreicht, dass weniger Wasser oder Wasserdampf in das Innere des zu behandelnden Holzes eindringt und dort durch eine Quellung der Holzfasern zur nachteiligen Rissbildung führt. Gleichzeitig wird durch das permanente Absaugen des Nebel- /Gasgemisches und Nachführen neuen Wassers, das dann erneut verdampft, erreicht, dass in der Kammer kaum Sauerstoff vorhanden ist. Etwaige unerwünschte Oxidationsprozesse in der Kammer, beispielsweise eine Verbrennung des Holzes, werden hierdurch verhindert. Das Absaugen in der Kammer entstehender Gase durch den leichten Unterdruck bewirkt zudem eine erhebliche Verbesserung des Geruches des dergestalt behandelten Holzes. Die Geruchsverbesserung ist vermutlich darauf zurückzuführen, dass während des Erhitzens des Holzes entstehendes Holzgas permanent durch den Unterdruck abgesaugt wird und sich nicht in der Kammer sowie darüber mittelbar auch im Holz anreichert. Die im Holzgas enthaltenen Verbindungen weisen einen sehr unangenehmen Geruch auf.

Mit Vorteil wird das während der thermischen Vorbehandlung der ersten äußeren Brettlage und der zweiten äußeren Brettlage ab Erreichen einer Temperatur von 100 °C in der Kammer, insbesondere von 130 °C, in die Kammer eingespritzte flüssige Wasser regelmäßig in einem zeitlichen Abstand von unter 20 Sekunden, insbesondere unter 10 Sekunden, eingespritzt. Es hat sich herausgestellt, dass der Wärmedurchgangskoeffizient und die Widerstandsfähigkeit des so behandelten Holzes weiter verbessert und auch eine Rissbildung weiter vermindert wird.

In einer anderen vorteilhaften Ausgestaltung der Erfindung bestehen die erste äußere Brettlage und die zweite äußere Brettlage aus Pappelholz, das thermisch analog zur wenigstens einen mittleren Brettlage aus Pappelholz vorbehandelt ist. Der Wärmedurchgangskoeffizient des dergestalt aufgebauten Brettschichtholzes ist bei dieser Ausgestaltung weiter erniedrigt und die Festigkeit und Widerstandsfähigkeit gegenüber Witterungseinflüssen des Brettschichtholzes dennoch ausreichend hoch.

Mit Vorteil ist jede Brettlage des Brettschichtholzes jeweils mit dem oder den unmittelbar benachbarten Brettlagen verleimt.

In einer besonders bevorzugten Ausgestaltung der Erfindung ist das Brettschichtholz senkrecht zu den Brettlagen symmetrisch aufgebaut. Bei einem Brettschichtholz aus lediglich drei Brettlagen weisen die erste und die zweite äußere Brettlage beispielsweise die gleiche Brettstärke auf und bestehen auch aus dem gleichen Material. Die mittlere Brettlage kann eine hiervon abweichende Stärke aufweisen, da der symmetrische Aufbau hiervon unberührt bliebe. Durch den symmetrischen Aufbau wird erreicht, dass sich das Brettschichtholz beispielsweise als Bestandteil eines Holzfensterrahmens im eingebauten Zustand in ein Gebäude bei unterschiedlichen klimatischen Einflüssen auf die erste äußere Brettlage gegenüber der zweiten äußeren Brettlage nicht verzieht. Der symmetrische Aufbau bezieht sich jedoch ausdrücklich nicht auf etwaige nachträgliche Fräs- oder Hobelarbeiten am erfindungsgemäßen Brettschichtholz, die einer Verarbeitung des Brettschichtholzes zu einem Fensterprofil geschuldet sind.

Die Erfindung wird ferner durch ein Holzfenster gelöst, bei dem der Holzrahmen zumindest ein Brettschichtholz mit den Merkmalen eines der vorhergehenden Ansprüche aufweist.

Weitere vorteilhafte Ausgestaltungen und Details der Erfindung sind den Unteransprüchen sowie dem nachfolgend beschriebenen schematisch dargestellten Ausführungsbeispiel zu entnehmen; es zeigen:
Fig. 1 ein erfindungsgemäßes Brettschichtholz in einer Querschnittsdarstellung und
Fig. 2 ein weiteres erfindungsgemäßes Brettschichtholz.

Nachfolgend werden gleich wirkende Elemente der Erfindung - sofern sinnvoll - mit einer einheitlichen Bezugsziffer versehen. Die nachfolgend beschriebenen Merkmale des Ausführungsbeispiels können auch einzeln oder in anderen Kombinationen als beschrieben Gegenstand der Erfindung sein.

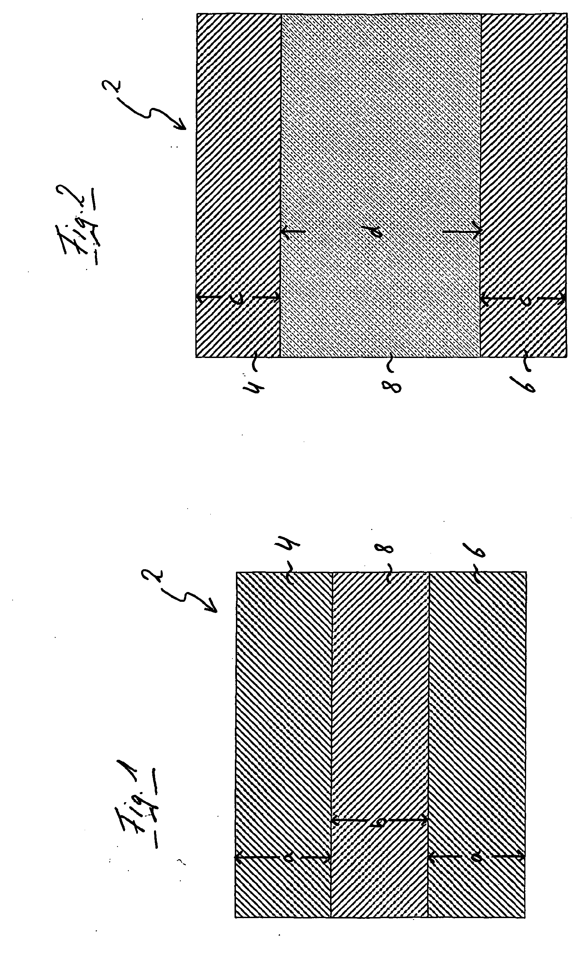

Fig. 1 und Fig. 2 zeigen jeweils ein erfindungsgemäßes Brettschichtholz 2 mit einer ersten äußeren Brettlage 4 und einer hierzu parallel angeordneten zweiten äußeren Brettlage 6, zwischen denen eine weitere mittlere Brettlage 8 angeordnet ist. Die erste äußere Brettlage 4 und die weitere äußere Brettlage 6 weisen jeweils die gleiche Brettstärke a auf. Die mittlere Brettlage 8 besteht aus thermisch vorbehandeltem Pappelholz. Die Brettstärke b der mittleren Brettlage 8 entspricht bei dem in Fig. 1 dargestellten Brettschichtholz 2 den Brettstärken a der beiden äußeren Brettlagen 4, 6. Die Brettstärke d der mittleren Brettlage 8 ist in dem in Fig. 2 dargestellten Ausführungsbeispiel etwa doppelt so groß wie die Brettstärken c der beiden äußeren Brettlagen 4, 6.

## Patentansprüche

1. Brettschichtholz (2) mit einer ersten äußeren Brettlage (4) und einer hierzu parallel angeordneten zweiten äußeren Brettlage (6), zwischen denen wenigstens eine weitere mittlere Brettlage (8) angeordnet ist, **dadurch gekennzeichnet, dass** zumindest eine der mittleren Brettlagen (8) aus Pappelholz besteht, das thermisch wie folgt vorbehandelt ist:
a) das Pappelholz wird in einer Kammer eines Wärmebehandlungsofen aufgeheizt;
b) ab Erreichen einer Temperatur von 100 °C in der Kammer, insbesondere von 130 °C, wird flüssiges Wasser in die Kammer eingespritzt und die Temperatur in der Kammer erhöht;
c) ab Erreichen einer Temperatur von 180 °C bis 200 °C, wird die Temperatur für 3 bis 6 Stunden gehalten;
d) anschließend wird die Temperatur in der Kammer abgekühlt und das Pappelholz wird der Kammer entnommen;
wobei während der Behandlungsschritte a) bis c) permanent Gas aus der Kammer mit einem Unterdruck von 5 bis 100 mbar, insbesondere 10 bis 30 mbar, abgesaugt wird.

2. Brettschichtholz (2) nach Anspruch 1, **dadurch gekennzeichnet, dass** das während der thermischen Vorbehandlung des Pappelholzes ab Erreichen einer Temperatur von 100 °C in der Kammer, insbesondere von 130 °C, in die Kammer eingespritzte flüssige Wasser regelmäßig in einem zeitlichen Abstand von unter 20 Sekunden, insbesondere unter 10 Sekunden, eingespritzt wird.

3. Brettschichtholz (2) nach einem der vorhergehenden Ansprüche, **dadurch gekennzeichnet, dass** die erste äußere Brettlage (4) und die zweite äußere Brettlage (6) aus dem gleichen Material bestehen und die gleiche Form aufweisen.

4. Brettschichtholz (2) nach einem der vorhergehenden Ansprüche, **dadurch gekennzeichnet, dass** die erste äußere Brettlage (4) und die zweite äußere Brettlage (6) aus Hartholz bestehen.

5. Brettschichtholz (2) nach Anspruch 4, **dadurch gekennzeichnet, dass** die erste äußere Brettlage (4) und die zweite äußere Brettlage (6) aus Buchenholz bestehen.

6. Brettschichtholz (2) nach einem der Ansprüche 1 bis 3, **dadurch gekennzeichnet, dass** die erste äußere Brettlage (4) und die zweite äußere Brettlage (6) aus Pappelholz bestehen.

7. Brettschichtholz (2) nach einem der vorhergehenden Ansprüche, **dadurch gekennzeichnet, dass** das Holz der ersten äußeren Brettlage (4) und der zweiten äußeren Brettlage (6) thermisch wie folgt vorbehandelt ist:
a) das Holz wird in einer Kammer eines Wärmebehandlungsofen aufgeheizt;
b) oberhalb einer Temperatur von 100 °C in der Kammer, insbesondere von 130 °C, wird flüssiges Wasser in die Kammer eingespritzt und die Temperatur in der Kammer erhöht;
c) ab Erreichen einer Temperatur von 180 °C bis 200 °C, wird die Temperatur für 3 bis 6 Stunden gehalten;
d) anschließend wird die Temperatur in der Kammer abgekühlt und das Holz wird der Kammer entnommen;
wobei während der Behandlungsschritte a) bis c) permanent Gas aus der Kammer mit einem Unterdruck von 5 bis 100 mbar, insbesondere 10 bis 30 mbar, abgesaugt wird.

8. Brettschichtholz (2) nach Anspruch 7, **dadurch gekennzeichnet, dass** das während der thermischen Vorbehandlung der ersten äußeren Brettlage (4) und der zweiten äußeren Brettlage (6) ab Erreichen einer Temperatur von 100 °C in der Kammer, insbesondere von 130 °C, in die Kammer eingespritzte flüssige Wasser regelmäßig in einem zeitlichen Abstand von unter 20 Sekunden, insbesondere unter 10 Sekunden, eingespritzt wird.

9. Brettschichtholz (2) nach einem der vorhergehenden Ansprüche, **dadurch gekennzeichnet, dass** jede Brettlage (4,6,8) des Brettschichtholzes (2) jeweils mit dem oder den unmittelbar benachbarten Brettlagen (4,6,8) verleimt ist.

10. Brettschichtholz (2) nach einem der vorhergehenden Ansprüche, **dadurch gekennzeichnet, dass** das Brettschichtholz (2) senkrecht zu den Brettlagen (4,6,8) zumindest bereichsweise symmetrisch aufgebaut ist.

11. Holzfenster für Gebäude mit einem Holzrahmen, **dadurch gekennzeichnet, dass** der Holzrahmen zumindest ein Brettschichtholz (2) mit den Merkmalen eines der vorhergehenden Ansprüche aufweist.
